Europäisches Patentamt

European Patent Office

Office européen des brevets

(11) Publication number: **0 062 826**
A2

# (12) EUROPEAN PATENT APPLICATION

(21) Application number: **82102623.4**

(22) Date of filing: **29.03.82**

(51) Int. Cl.³: **B 29 F 3/04**
**B 29 F 3/10, B 29 D 23/04**

(30) Priority: **15.04.81 ES 501455**

(43) Date of publication of application:
**20.10.82 Bulletin 82/42**

(84) Designated Contracting States:
**AT BE CH DE FR GB IT LI LU NL SE**

(71) Applicant: **Quintana Quintana, Blas**
**Faycan no 6 Vecindario**
**Las Palmas de Gran Canaria(ES)**

(72) Inventor: **Quintana Quintana, Blas**
**Faycan no 6 Vecindario**
**Las Palmas de Gran Canaria(ES)**

(74) Representative: **Prato, Roberto et al,**
**c/o Ingg. Carlo e Mario Torta Via Viotti 9**
**I-10121 Torino(IT)**

(54) **Improvements in and to feeder apparatuses for feeding a resistent filamentous element housed in the interior of flexible pipes.**

(57) A feeding apparatus for feeding a resistant filamentous element extending in the interior of flexible pipes manufactured by means of extrusion machines of conventional type. The improvements consist in that the apparatus is coupled to the extrusion head of the machine and is provided with a tubular piece which cooperates in feeding the filamentous element which passes through the interior of the extrusion head into the interior of a conduit which traverses in a longitudinal direction the extrusion chamber coaxially therewith, the said filamentous element coming out through the interior of the flexible pipe which is being formed and successively wound in order to facilitate storage.

Fig. 1

1

IMPROVEMENTS IN AND TO FEEDER APPARATUSES FOR FEEDING A

RESISTENT FILAMENTOUS ELEMENT HOUSED IN THE INTERIOR OF

FLEXIBLE PIPES.

This invention relates to improvements in and to feeder apparatuses for feeding a resistent filamentous element housed in the interior of flexible pipes, and especially in pipes for electric installations, and particularly in the installations which are intended for rooms and habitations; the matter in hand is, in reality, an improvement to the conventional extrusion machines which produce flexible pipes; it is understood that these improvements include all those variations and modifications which may be made without altering the essence of the invention.

The feeder is based substantially on a conduit guiding a resistent filamentous element which is housed in the interior and along the entire length of the said flexible pipes, at the same moment of their being molded or manufactured.

The guide conduit initiates outside the extrusion machine and terminates at the end of the last piece which is contained within the pipe being manufacture by the said machine. Said guide conduit is formed on one hand by various tubular portions connected to each other and, on the other hand, it is formed by the pieces behind the die,and the said pieces are drilled all along their length internally and concentrically in order to allow the passage of the resistent filamentous element, such as fiber, cord, wire, thread and the like,having a small cross-section and a high tensile strength.

The guide conduit has to be introduced through the head or the head support of the machine, passing through all the pieces which are situated in its passage into the interior of the head, till it reaches the nearest end of the die which is traversed internally and concentrically along its whole length by said guide conduit.

Threaded into the last centimeter of the dies is the guide pipe,which is hollow along its entire length in order to allow the passage of said filamentous element having a small cross-section and a high tensile strength.

3

The tubular portion which traverses the die before being introduced into it, is curved by a suitable number of degrees such as to oppose a minimum resistance to the passage of the filamentous element; at the other end there is a reduction of a part of the thinnest conduit, and this is the point at which the adjustment is carried out by the guide of the pipe by screwing it into the die.

This curve of the said tubular portion is situated before the die and terminates where the said die initiates; in addition, said curved portion has to be inserted into and welded in the interior of the piece into which the die is threaded for its anchorage, letting the tubular portion to project as far as necessary from the die support member, as for rubbing or connecting the other tubular portion which continues towards the outside of the extrusion machine.

In the conventional sxtrusion machines which carry out the molding by means of air under pressure there is provided a pipe guide in the interior of the molding chamber and along its entire width (referring to that which guides the pipe being produced by the extrusion machine); this pipe guide is hollow along its entire length and concentrical, in order that the filamentous

4

element already mentioned hereinabove, having a very high tensile strength, may pass through said guide conduit.

Before iniating the manufacture of the flexible pipe, the conduit which guides the filamentous element is inserted and the filamentous element is made to come out from the guide pipe to an extent of about one meter, and thereafter the work of the machine is initiated, and after having allowed the tube to project about half a meter from the molding chamber the filamentous element is connected to the tube, and by traction and at the same speed of production the tube together with the filamentous element contained therein is brought to the take-up bobbin and is hooked to this latter, and the said bobbin, rotating, by continuous traction pulls and drags the fiber and the pipe jointly and rolls up the inserted pipe at the same speed at which it is being produced.

In the machines which produce the pipe by a vacuum, all the pieces which are situated after the die will also be empty concentrically on their entire length, in order to attain in the guide pipe the same purpose as in the preceding case, if the extrusion machines are of the type which produces or molds the pipe by air under pressure, as has been mentioned hereinabove.

To better illustrate the invention, the present description is accompanied by drawings which show a diagrammatic representation of an embodiment, given by way of a non limiting example, of the present invention, it being understood that the invention includes all those constructional variations which may be made without altering the essence of the invention itself; the annexed drawing shows diagrammatically a vertical section of the portion of the machine in which the subject of the invention is installed.

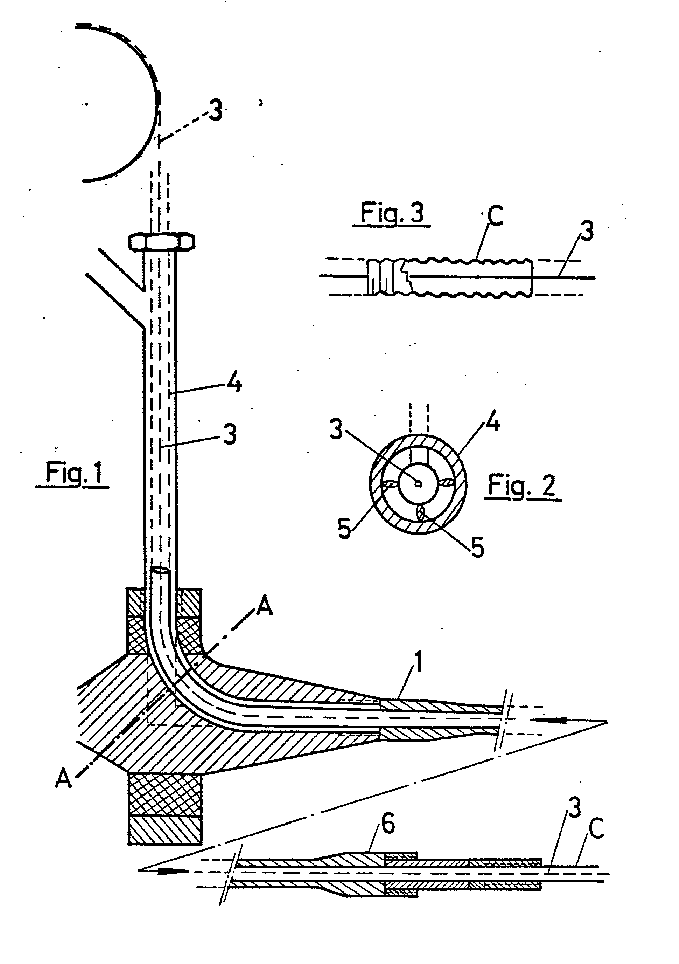

According to the drawing, on the head and the general outle of the machine (1-6) there is disposed a bobbin or the like (A) on which the fiber, threadn wire or other suitable filamentous element (3) having a small cross-section and a very high tensile strength is stored.

This filamentous element penetrates into the guide pipe (4) through which it passes to the head (6) of the machine, in which head there is made to come out the flexible pipe (C) which accomodates concentrically in its interior the filamentous element (3). This flexible pipe may be smooth or wrinkled, indifferently.

In the cross-section of the machine along line A-A there is visible the pipe (4) with the conduit for the outlet or passage, in a concentrical manner, of the filamentous element (3), there being provided spacers (5) for maintaining the said conduit in the correct position.

The present invention includes all those variations and structural modifications which may be made without altering the general essence of the invention itself.

7.

C L A I M S

1.- Improvements in and to apparatuses feeding a filamentous element which is housed in the interior of flexible, preferably wrinkled or corrugated pipes which are manufactured by air or vacuum extrusion machines, characterized in being coupled to the extrusion head of the machine and provided with a tubular element which cooperates in feeding, from the interior of the machine, the said filamentous element, of very high tensile strength, which passes through the interior of the head to the interior of a conduit which traverses coaxially in a longitudinal direction the extrusion chamber; the said filamentous element coming out through the interior of the flexible pipe which has been formed and which is successively wound in a suitable manner in order to facilitate its storage.

2.- Improvements as claimed in Claim 1, characterized in that in case the said tube is formed by extrusion by means of air under pressure, the tubular piece of the apparatus is provided with a concentrical tubular portion through the interior of which the said filamentous element slides or passes and which engages in a suitable and impervious manner the corresponding nearest end of the

8

said conduit, beginning from the which the said filamentous element passes through the said conduit to the outlet of the extrusion chamber; and in the coupling of said tubular portion with the end of the said conduit said portion has outlet apertures for the air under pressure flowing through a chamber defined concentrically between the tubular piece and the tubular portion through which the said filamentous element passes.

3.- Improvements as claimed in Claim 1, characterized in that in case of said flexible pipe being manufactured by extrusion by means of a vacuum the apparatus is provided with a tubular piece through which the filamentous element passes, which tubular piece is conveniently coupled with the nearest end of the conduit disposed in a suitable manner and in the longitudinal direction in the interior of the extrusion chamber.

Fig. 1

Fig. 3

Fig. 2